# EUROPÄISCHE PATENTANMELDUNG

(11) **EP 4 265 165 A1**
(43) Veröffentlichungstag der Anmeldung: **25.10.2023**
(21) Anmeldenummer: 23167648.7
(22) Anmeldetag: 13.04.2023
(51) Int. Cl.: A47K 3/40, A47K 3/02, B29L 31/00

(54) **SANITÄRGEGENSTAND SOWIE VERFAHREN ZUR HERSTELLUNG EINES SOLCHEN**

(30) Priorität: 21.04.2022 DE 102022109646
(71) Anmelder: Duravit Aktiengesellschaft, 78132 Hornberg (DE)
(72) Erfinder: STAMMEL, Thomas, 78132 Hornberg (DE)
(74) Vertreter: Lindner Blaumeier Patent- und Rechtsanwälte

(57) **Zusammenfassung**

Sanitärgegenstand, bestehend aus einer aus einem ausgehärteten Harz mit eingebetteten Verstärkungsfasern gebildeten, die Form des Sanitärgegenstands definierenden Träger, der zumindest an einer Sichtseite mit einer ausgehärteten Gelcoat-Schicht belegt ist.

## Beschreibung

Die Erfindung betrifft einen Sanitärgegenstand.

Sanitärgegenstände in Form von Badewannen, Duschtassen, Waschtischen oder Waschbecken und Ähnliches werden zunehmend aus einem Kompositmaterial, oft auch "solid surface" genannt, hergestellt. Zur Herstellung wird eine entsprechende Masse aufbereitet, bestehend aus einem aushärtbaren Harz als Basis, wobei zum Aushärten zumeist ein Härter zugegeben wird. Das Harz ist zumeist ein Polyesterharz, ein Acrylharz oder mit ein Acrylmonomeren modifiziertes Polyesterharz. Als Härtemittel wird zumeist ein Methyl-Ethyl-Ketone-Peroxid (MEKP) verwendet. Die Masse enthält ferner zusätzlich organische und/oder anorganische Additive wie beispielsweise Pigmente, antibakterielle Mittel, Flammschutzmittel wie ATH, sowie Verstärkungsmittel wie Glasperlen und Ähnliches. Die fluide Masse wird in eine Form gegossen, wo sie anschließend aushärtet und nach Aushärten entformt werden kann. Unter Verwendung einer solchen Form ist es auch denkbar, Hinterschnitte und ähnliche dreidimensionale Strukturen herzustellen, wenn eine entsprechende Form mit entsprechenden Schiebern oder Keilen etc. verwendet wird. Hierdurch können qualitativ hochwertige, optisch ansprechende Sanitärgegenstände hergestellt werden.

Nachteilig ist, dass derartige Sanitärgegenstände, insbesondere wenn sie größer sind wie beispielsweise Badewannen oder Duschtassen oder lange Waschtische, relativ schwer sind. Dies resultiert daraus, als die Wandstärke des Sanitärgegenstands entsprechend groß zu bemessen ist, um die geforderten mechanischen Eigenschaften bereitzustellen, insbesondere in Bezug auf mechanische Lasten, wie auch entsprechende thermische Belastungen, denen solche Sanitärgegenstände unterworfen sind. Das hohe Gewicht macht nicht nur den Transport und die Montage aufwendig, vielmehr ist auch ein hoher, nicht zuletzt aus Umweltschutzgründen nachteiliger Materialverbrauch damit verbunden.

Bekannt ist es ferner, Sanitärgegenstände wie Badewannen oder Duschtassen durch Thermoformen einer entsprechend bemessenen Acrylharzplatte herzustellen.

Da die Acrylharzplatte relativ dünn ist, ist es erforderlich, sie an der Rückseite entsprechend zu stabilisieren, wozu eine Verstärkungsschicht auf die Rückseite des tiefgezogenen Acrylteils aufgebracht wird, die aus einer, üblicherweise glasfaserverstärkten, Polymerbeschichtung, gegebenenfalls in Verbindung mit integrierten Versteifungsplatten und ähnlichem, besteht.

Zwar ist es möglich, durch das Tiefziehen einen dreidimensionalen Acrylgegenstand herzustellen, der sehr kleine oder schmale Hinterschneidungen und Ähnliches aufweist. Größere Hinterschnitte, wie sie beispielsweise durch Formgebung mit einer Gießmasse herstellbar sind, sind bei diesen Verfahren jedoch nicht herstellbar. Ein weiterer Nachteil des Thermoformverfahrens ist, dass die Dicke der geformten Acryllage über die Fläche variiert. Je stärker ein Bereich verformt wird, desto dünner ist die Acryllage am fertigen Produkt. Dies ist insbesondere in Bereich von Biegungen oder Ecken und Kanten der Fall. Je stärker die Verformung, umso dünner die Acryllage, was im Extremfall sogar dazu führen kann, dass durch die Acryllage hindurch die Rückseitenverstärkung geringfügig sichtbar ist. Dies ist nachteilig und ungewünscht. Ein weiterer Nachteil ist darin zu sehen, dass die Möglichkeit zur Farbgebung innerhalb der Acrylschicht stark begrenzt ist. Zwar kann grundsätzlich eine eingefärbte Acrylplatte verwendet werden. Jedoch kommt es an stärker umgeformten Bereichen zu Dehnungen innerhalb der Molekülketten der Acrylmatrix, was wiederum dazu führt, dass sich in diesen Bereichen eine Farbänderung ergibt, üblicherweise wird das eingefärbte Acryl in diesen Bereichen heller respektive blasser. Aus diesem Grund können dunklere Gegenstände aus einem solchen Material nicht hergestellt werden.

Der Erfindung liegt das Problem zu Grunde, einen demgegenüber verbesserten Sanitärgegenstand anzugeben.

Zur Lösung dieses Problems ist erfindungsgemäß ein Sanitärgegenstand vorgesehen, bestehend aus einem aus einem ausgehärteten Harz mit eingebetteten Verstärkungsfasern gebildeten, die Form des Sanitärgegenstands definierenden Träger, der zumindest an einer Sichtseite mit einer ausgehärteten Gelcoat-Schicht belegt ist.

Der erfindungsgemäße Sanitärgegenstand besteht im einfachsten Fall aus zwei Lagen, nämlich dem eigentlichen Träger, der die dreidimensionale Form des Sanitärgegenstands definiert. Dieser Träger ist aus einem ausgehärteten Harz gebildet, in das Verstärkungsfasern eingebettet sind. Diese Verstärkungsfasern können bevorzugt Glasfasern sein, denkbar sind aber auch Aramidfasern oder Carbonfasern oder Kunststofffasern. Diese Fasern dienen dazu, die Harzmatrix weiter zu versteifen, um die mechanische Festigkeit des Trägers zu erhöhen.

Zumindest die Sichtseite des Trägers ist mit einer ausgehärteten Gelcoat-Schicht belegt, die von der Sichtseite des Sanitärgegenstands sichtbar ist. Diese Gelcoat-Schicht ist aus einem Hartlack und besteht regelmäßig aus einem mit Kieselsäure versetzten Kunstharz. Als Kunstharz, also als eigentliche Harzbasis, wird zumeist ungesättigter Polyester oder ein Epoxidharz verwendet. Das Harz ist vollkommen faserfrei, sodass sich eine optisch einwandfreie, ungestörte Lackschicht ausbilden kann. Durch die zugesetzte Kieselsäure wird die Oberfläche der Lackschicht abriebfester. Da es sich um eine Lackschicht handelt, die fluid appliziert wird und anschließend aushärtet, kann eine homogene Gelcoat-Schichtdecke über die gesamte Fläche, auf der die Gelcoat-Schicht appliziert wird, erreicht werden. Auch ist es ohne weiteres möglich, beliebige Lackfarben zu verwenden, da der Polymerbasis, also dem Harz, beliebige Farbpigmente zugemischt werden können. Da aufgrund der fluiden Applikation keinerlei mechanische Belastungen während des Aushärtens wirken, die in irgendeiner Form zu Farbveränderungen führen würden, kann eine vollkommen farbhomogene Lackschicht erreicht werden.

Da sowohl der Träger aus einem fluiden Material, nämlich dem aushärtbaren Harz mit eingebetteten Verstärkungsfasern, als auch die ausgehärtete Gelcoat-Schicht aus einem fluiden Material hergestellt wird, ist auch ohne weiteres möglich, komplexer geformte Gegenstände mit entsprechend großen Hinterschnitten herzustellen, wie sie beispielsweise bei Badewannen oder Duschtassen insbesondere am jeweiligen Wannen- oder Tassenrand vorgesehen sind. Das heißt, dass eine große Bandbreite herstellbarer Geometrien in Verbindung mit einer nahezu beliebigen Farbgebung an der Sichtseite des Sanitärgegenstands gegeben ist.

Als Harz des Trägers kann ein Epoxidharz, ein Polyesterharz, ein Acrylharz, ein Vinylesterharz oder Derivate davon verwendet werden, wobei diese Aufzählung nicht abschließend ist. Da zumeist eine reaktive Härtung erfolgt, ist ein entsprechender Härter wie beispielsweise MEKP zuzugeben, gegebenenfalls auch ein Beschleunigungsmittel als zusätzliches Additiv.

Die Verstärkungsfasern können kürzere Faserstücke sein, die beispielsweise eine Länge von 1 - 35 mm vorzugsweise 1 - 25 mm aufweisen. Die Faserstücke sollten einen Durchmesser respektive eine Dicke von 10 - 15 µm, vorzugsweise zwischen 10 - 13 µm aufweisen. Je nachdem wie die Verarbeitung erfolgt, kann die Faserlänge gewählt werden. Sofern die Trägermasse durch Spritzen verarbeitet wird, sind kürzere Fasern bevorzugt, da hierdurch der Spritzprozess einfacher ist. Wird die Trägermasse beispielsweise mit Pinsel oder Rolle aufgetragen, können längere Fasern verwendet werden, wobei über die längeren Fasern eine noch bessere Verankerung und damit Verstärkung erreicht werden kann.

Anstelle einer Verwendung kürzer Faserstücke ist es auch denkbar, dass die Fasern in Form von Fasermatten vorliegen, die also als großflächigere Mattenabschnitte in die Polymer- respektive Harzmatrix der Trägermasse eingebettet werden und am finalen Sanitärgegenstand in der ausgehärteten Trägermasse vorliegen. Die Fasermatten sollten dabei ein Mattengewicht von 200 - 600 g/m² aufweisen.

Denkbar ist es ferner, in dem Träger an einer oder mehreren Positionen platten- oder leisten- oder profilförmige Verstärkungselemente einzubetten. Insbesondere bei größeren Sanitärgegenständen wie beispielsweise einer Bade- oder Duschwanne ist es zweckmäßig, beispielsweise im Randbereich oder im Bodenbereich zusätzliche Verstärkungselemente trägerseitig einzubetten. Denkbar ist es beispielsweise am Rand der Bade- oder Duschwanne um laufend leisten- oder profilförmige, also längliche Verstärkungselemente einzubetten, während im Bereich des Wannenbodens eine oder mehrere plattenförmige Verstärkungselemente integriert werden können. Hierüber kann gezielt eine zusätzliche lokale Verstärkung erfolgen, insbesondere in Bereichen, die im Rahmen der Nutzung verstärkt mechanisch beansprucht werden.

Ein solches Verstärkungselement kann beispielsweise aus Holz, Sperrholz, Schichtholz, einem Laminat, insbesondere einem Faserlaminat oder Metall sein, oder als Faserplatte ausgeführt sein. Es können also unterschiedlichste Verstärkungselemente verwendet werden, solange sie hinreichend in die Polymermatrix des Trägers eingebettet werden können. Im Rahmen der Herstellung kann beispielsweise eine erste Trägermasseschicht appliziert werden, wonach das oder die Verstärkungselemente auf die Trägermasseschicht aufgebracht werden, wonach eine zweite Trägermasseschicht aufgebracht wird, die die Verstärkungselemente dann final einbettet. Im Rahmen dessen können natürlich auch entsprechende Verstärkungsfasern mit eingebracht werden, seien es Faserstücke, seien es Fasermatten.

Die Gelcoat-Schicht selbst kann aus einem Polyesterharz, einem Vinylesterharz oder einem Epoxidharz als Polymermatrix bestehen, wobei diese Aufzählung nicht abschließend ist. Sie kann, worauf bereits hingewiesen wurde, Farbpigmente aufweisen, das heißt eingefärbt sein, wobei wie ausgeführt eine vollkommen homogene Farbgebung über die gesamte Beschichtungsfläche erreicht werden kann. Alternativ oder zusätzlich kann auch ein antibakteriell wirkendes Mittel, z.B. Silberionen, enthalten sein, was, nachdem es sich um Sanitärgegenstände handelt, von besonderem Vorteil ist.

Die Dicke der ausgehärteten Gelcoat-Schicht sollte zwischen 0,4 - 1,5 mm, insbesondere zwischen 0,5 - 1,0 mm liegen. Die Gelcoat- oder Hartlackschicht ist also sehr dünn, verglichen mit der deutlich dickeren, ausgehärteten Trägerstärke, die im Bereich von 5 - 20 mm, insbesondere 8 - 15 mm liegen sollte. Die Applizierung einer derart dünnen Gelcoat-Schicht ist, da es eine fluide Masse ist, einfach und gleichmäßig möglich, beispielsweise durch Aufsprühen.

Der Träger sollte erfindungsgemäß eine Dicke von 0,5 - 12 mm in einem Bereich ohne Verstärkungselement und 0,5 - 6 mm in einem Bereich mit Verstärkungselement aufweisen.

Der "Untergrund", auf dem die Gelcoat-Schicht aufgebracht ist, also die der Sichtfläche zugewandte Fläche des Trägers, kann ebenflächig, also unstruckturiert und damit glatt sein. Alternativ ist es auch denkbar, dass diese Trägerfläche zumindest abschnittsweise eine Oberflächenstrukturierung aufweist, die auch von der Gelcoat-Schicht abgebildet ist. Eine solche Oberflächenstrukturierung kann beispielsweise eine Noppen- oder Riffelstruktur mit länglichen, gerade oder gewellten Erhebungen sein, worüber beispielsweise eine Anti-Rutsch-Fläche gebildet werden kann. Denkbar ist es auch, die Oberflächenstrukturierung nach Art einer Holzoptik, also einer Art Maserung auszuführen. Da die Strukturierung auch von der wie beschrieben sehr dünnen Gelcoat-Schicht abgebildet ist, ist sie folglich oberflächlich haptisch fühlbar, wie auch sichtbar.

Der Sanitärgegenstand selbst ist bevorzugt eine Badewanne oder eine Duschtasse, also ein relativ großer, wannen- oder trogförmiger Gegenstand, der insbesondere randseitig häufig auch komplexere Strukturen aufweist und der, da sich üblicherweise wenigstens eine Person im Rahmen der Nutzung auf dem Sanitärgegenstand befindet, beachtlichen mechanischen Lasten ausgesetzt ist.

Neben dem Sanitärgegenstand selbst betrifft die Erfindung ferner ein Verfahren zur Herstellung eines solchen Sanitärgegenstands. Dieses Verfahren zeichnet sich gemäß einer ersten Verfahrensalternative durch folgende Schritte aus:
- Bereitstellen einer Form und Aufbringen einer fluiden Gelcoat-Masse auf eine Fläche der Form
- Aushärten der Gelcoat-Masse zur Ausbildung einer Gelcoat-Schicht
- Aufbringen einer fluiden Trägermasse enthaltend ein Harz und Verstärkungsfasern auf die Gelcoat-Schicht sowie gegebenenfalls ein oder mehrere Verstärkungselemente
- Aushärten der Trägermasse zur Ausbildung des Trägers
- Entnahme des Sanitärgegenstands aus der Form.

Bei dieser Erfindungsvariante erfolgt die Ausbildung des Sanitärgegenstandes komplett in einer Form. Vom Ablauf her wird, nachdem die Form bevorzugt zuerst durch Reinigen und Abdichten vorbereitet wurde, zunächst die Gelcoat-Masse eingebracht und ausgehärtet, das heißt, dass in der Form zuerst die Gelcoat-Schicht gebildet wird. Anschließend wird auf diese ausgehärtete Gelcoat-Schicht die Trägermasse samt der Verstärkungsfasern aufgebracht, sowie gegebenenfalls das oder die Verstärkungselemente in diese eingebettet, wonach die Trägermasse aushärtet. In der Form liegt dann der fertige Sanitärgegenstand bestehend aus Gelcoat-Schicht und Träger vor, welcher dann entformt wird.

Sofern es die Art des Sanitärgegenstandes erfordert, dass auch ein oder mehrere Verstärkungselemente eingebettet werden, so kann zur Einbettung des oder der Verstärkungselemente zunächst eine erste Teilschicht aus der Trägermasse aufgebracht werden, wonach das oder die Verstärkungselemente auf die erste Teilschicht aufgebracht werden, wonach eine die Verstärkungselemente einbettende zweite Teilschicht aus der Trägermasse auf die erste Teilschicht und das oder die Verstärkungselemente aufgebracht wird. Es wird demzufolge die Trägermasse in wenigstens zwei Lagen aufgebracht, wobei vor Aufbringen der zweiten Teilschicht die Verstärkungselemente auf die erste Teilschicht aufgebracht und dann eingebettet werden. Dabei kann in jeder der Teilschichten oder Masselagen ein Faseranteil enthalten sein, seien es kurze Faserstücke oder seien es eingelegte Fasermatten.

Nach dem Entformen des fertigen Sanitärgegenstandes kann eine Nachbearbeitung einer von der Gelcoat-Schicht gebildeten Sichtseite des Sanitärgegenstandes erfolgen. Dies kann beispielsweise eine Sandstrahlbearbeitung oder ein Schleifprozess sein, durch die die Gelcoat- oder Hartlackschicht leicht mattiert wird, oder Ähnliches.

Ferner ist es denkbar, dass nach dem Entformen, und gegebenenfalls vor der Bearbeitung der Oberfläche, ein oder mehrere Randabschnitte des Sanitärgegenstandes bearbeitet oder mit einem oder mehreren weiteren Bauteilen verbunden, insbesondere verklebt werden. Mitunter ist für die finale Montage vorgesehen, am Sanitärgegenstand selbst noch ein weiteres Bauteil wie beispielsweise eine zum Boden hin abschließende Schürze oder ähnliche anzubringen. Hierzu werden der oder die Abschnitte am Sanitärgegenstand, also beispielsweise entsprechende Kanten oder dergleichen, mechanisch bearbeitet, damit eine Befestigungsschnittstelle gegeben ist, an der das Bauteil angebunden wird. Dieses Anbinden erfolgt bevorzugt durch Verkleben mit Harz. Bevorzugt wird hierzu das Material, aus dem auch die Gelcoat-Schicht ist, verwendet.

Eine zweite erfindungsgemäße Verfahrensalternative zur Herstellung eines Sanitärgegenstandes sieht folgende Schritte vor:
- Bereitstellen einer Form und Aufbringen einer fluiden Trägermasse enthaltend ein Harz und Verstärkungsfasern sowie gegebenenfalls ein oder mehrere Verstärkungselemente auf eine Fläche der Form
- Aushärten der Trägermasse zur Ausbildung eines Trägers
- Entnahme des Trägers aus der Form
- Aufbringen einer fluiden Gelcoat-Masse auf eine Fläche des Trägers
- Aushärten der Gelcoat-Masse zur Ausbildung einer Gelcoat-Schicht.

Bei dieser Verfahrensvariante wird in der Form nur der Träger hergestellt, über den die dreidimensionale Form des finalen Sanitärgegenstands definiert wird. Hierzu wird eine fluide Trägermasse aus Harz und Verstärkungsfasern auf einer Formfläche appliziert, sowie, sofern erforderlich, ein oder mehrere Verstärkungselemente eingebettet. Anschließend erfolgt das Aushärten der Trägermasse, sodass sich ein fertiger, gehärteter Träger ausbildet. Dieser wird dann der Form entnommen, wonach auf die Seite oder Fläche des Trägers, über die die Sichtseite des fertigen Sanitärgegenstands definiert wird, eine fluide Gelcoat-Masse aufgebracht wird. Das heißt, dass die Beschichtung mit der Gelcoat-Masse außerhalb der Form stattfindet. Nach dem Aufbringen härtet die Gelcoat-Masse zur finalen Ausbildung der Gelcoat-Schicht aus.

Auch hier ist es zur Einbettung eines oder mehrerer Verstärkungselemente zweckmäßig, zunächst eine erste Teilschicht aus der Trägermasse aufzubringen, wonach das oder die Verstärkungselemente auf die erste Teilschicht aufgebracht werden, wonach eine die Verstärkungselemente einbettende zweite Teilschicht aus der Trägermasse auf die erste Teilschicht und das oder die Verstärkungselemente, diese einbettend, aufgebracht wird.

Auch hier kann nach dem Ausbilden der Gelcoat-Schicht eine Nachbearbeitung einer von der Gelcoat-Schicht gebildeten Sichtseite des Sanitärgegenstands erfolgen, beispielsweise durch Sandstrahlen, Schleifen oder Ähnliches, beispielsweise um eine Mattierung zu erreichen.

Weiterhin kann nach dem Aushärten der Gelcoat-Schicht, und gegebenenfalls vor der Bearbeitung der Oberfläche, ein oder können mehrere Randabschnitte des Sanitärgegenstands bearbeitet und mit einem oder mehreren weiteren Bauteilen verbunden, insbesondere verklebt werden, wie bereits auch zur vorstehend genannten, ersten Alternative beschrieben.

Für beide erfindungsgemäßen Verfahrensvarianten gilt, dass die Gelcoat-Masse bei einer Temperatur von 35°C - 55°C für eine Dauer von 5 - 20 Minuten und die Trägermasse bei einer Temperatur von 35°C - 55°C für eine Dauer von 1 - 2 Stunden ausgehärtet werden sollte. Bevorzugt sollte die Härtetemperatur sowohl bezüglich der Gelcoat-Masse als auch der Trägermasse zwischen 40°C - 50°C, insbesondere im Bereich von 45°C liegen. Die Dauer der Gelcoat-Härtung sollte bevorzugt bei ca. 15 min. liegen, die der Trägermassehärtung bei ca. 1,5 Std. Die jeweiligen Härtedauern werden insbesondere abhängig von der jeweils applizierten Dicke der Gelcoat-Masseschicht wie auch der Trägermasseschicht gewählt.

Die Gelcoat-Masse und/oder die Trägermasse werden bevorzugt aufgespritzt, also mit Hilfe einer Sprühpistole appliziert. Dies ist im Falle der Gelcoat-Masse, die keine Fasern enthält, unproblematisch. Auch die Trägermasse mit kürzeren Faserstücken kann ohne Weiteres durch Aufspritzen appliziert werden. Gleiches gilt für die Applizierung der Trägermasse im Faserspritzverfahren bei Verwendung von kontinuierlichen Faserbündeln (continuous roving), wobei die Fasern erst beim eigentlichen Spritzen auf ihre endgültige Länge gebracht werden. Enthält die Trägermasse keine Faserstücke, sondern werden diese in Form von Fasermatten appliziert, ist das Spritzen zwangsläufig unproblematisch. Alternativ kann die Applizierung der Trägermasse auch mittels Pinsel oder Bürste erfolgen.

Die verwendete Gelcoat-Masse kann folgendes enthalten:
- Harz: 85 - 95 Gew.%
- Pigment: bis 7 Gew.%
- Antibakterielles Mittel: bis 0,5 Gew.%

Die Summe beträgt natürlich 100 Gew.%, einschließlich etwaiger sonstiger Zuschläge.

Als Harz der Gelcoat-Masse kann Polyesterharz, Vinylesterharz oder Epoxidharz verwendet werden, wobei diese Aufzählung nicht abschließend ist. Als Pigmente können beliebige Farbpigmente, primär anorganischer Natur, verwendet werden, die im Lackbereich Verwendung finden. Als antibakterielles Mittel können beispielsweise Metallionen, insbesondere Silberionen eingebracht werden.

Die verwendete Trägermasse kann folgende Zusammensetzung aufweisen:
- Harz: 40 - 74 Gew.%
- Härter: 1 - 3 Gew.%
- Glasfaser: 10 - 25 Gew.%
- Füllstoff: 0 - 50 Gew.%

Zwei Varianten der Zusammensetzung der Trägermasse können wie folgt formuliert sein:
1. Variante:
   - Harz: 40 - 60 Gew.%
   - Härter: 1 - 3 Gew.%
   - Glasfaser: 10 - 13 Gew.%
   - Füllstoff: 30 - 50 Gew.%
   oder
2. Variante:
   - Harz: 56 - 74 Gew.%
   - Härter: 1 - 5 Gew.%
   - Glasfaser: 10 - 25 Gew.%
   - Füllstoff: 0 - 30 Gew.%.

Die Summe beträgt natürlich 100 Gew.%, einschließlich etwaiger sonstiger Zuschläge. Der Anteil des partikulären Füllstoffs versteht sich stets zusätzlich zur Glasfaser.

Als Harz der Trägermasse, also als die Polymermatrix bildendes Mittel, kann Epoxidharz, Polyesterharz, Acrylharz, Vinylesterharz oder Derivate davon verwendet werden, wobei diese Aufzählung nicht abschließend ist. Als Härter kann beispielsweise MEKP verwendet werden, gegebenenfalls zusätzlich mit einem Beschleunigungsmittel, das beispielsweise Cobalt enthält. Als Glasfasern können wie beschrieben Faserstücke oder Fasermatten verwendet werden. Füllstoffe können beispielsweise anorganische Füllstoffe in Form von Quarzsand oder ähnliche Partikel, aber auch Glasperlen, über die das Gewicht zusätzlich reduziert werden kann, und Ähnliches verwendet werden.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: Eine geschnittene Teilansicht eines erfindungsgemäßen Sanitärgegenstands einer ersten Ausführungsform,
- Fig. 2: eine geschnittene Teilansicht eines erfindungsgemäßen Sanitärgegenstands einer zweiten Ausführungsform,
- Fig. 3: eine geschnittene Teilansicht eines erfindungsgemäßen Sanitärgegenstands einer dritten Ausführungsform,
- Fig. 4: eine geschnittene Teilansicht eines erfindungsgemäßen Sanitärgegenstands einer vierten Ausführungsform,
- Fig. 5 ein: Flussdiagram zur Erläuterung des erfindungsgemäßen Verfahrens gemäß einer ersten Erfindungsalternative,
- Fig. 6 ein: Flussdiagram zur Erläuterung des erfindungsgemäßen Verfahrens gemäß einer zweiten Erfindungsalternative, und
- Fig. 7: eine Schnittansicht einer erfindungsgemäßen Badewanne

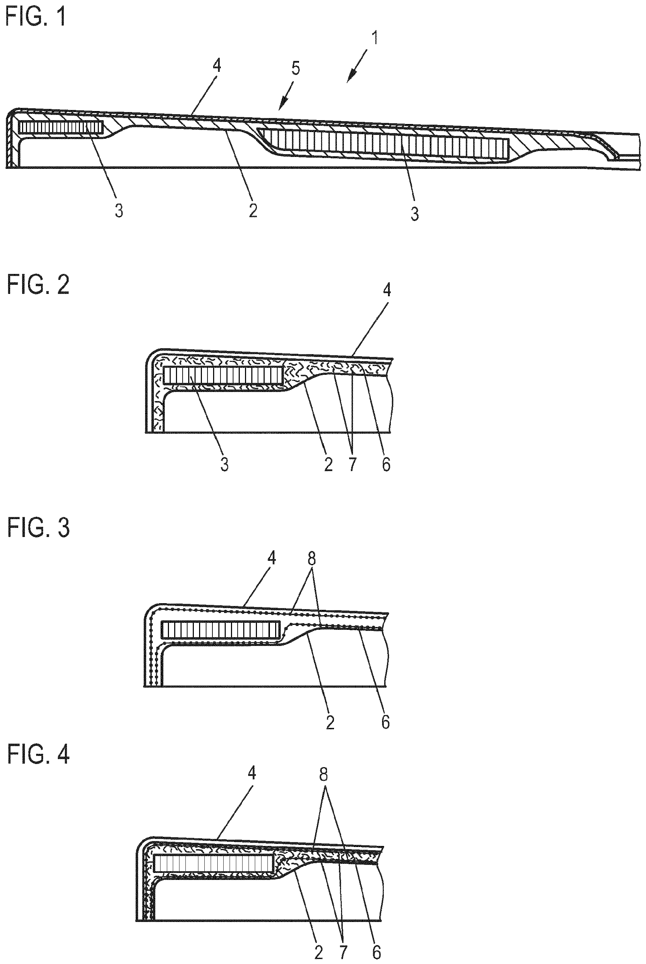

Fig. 1 zeigt eine geschnittene Teilansicht eines erfindungsgemäßen Sanitärgegenstands 1, beispielsweise eine Teilansicht einer Duschtasse. Der Sanitärgegentand 1 besteht aus einem Träger 2 aus einem ausgehärteten Harz mit darin eingebetteten Verstärkungsfasern, worauf nachfolgend noch eingegangen wird. Neben solchen Fasern können auch weitere Füllstoffe, beispielsweise Sand oder Glasperlen oder Ähnliches, in der Trägermassematrix eingebettet sein.

Fig. 1 zeigt ferner die Möglichkeit, in dem Träger 2 respektive der Trägermasse ein oder mehrere Verstärkungselemente 3, die hier leistenförmig oder plattenförmig sind, aber auch profilförmig oder in Form von Wabenstrukturen und Ähnliches ausgebildet sein können, einzubetten. Die Verstärkungselemente 3 sind vollständig von der Trägermatrix umschlossen, also nicht sichtbar.

Auf dem Träger 2 ist eine Gelcoat-Schicht 4 aufgebracht, die ebenfalls aus einem ausgehärteten Harz besteht, in das gegebenenfalls Farbpigmente eingebracht sind, sodass über diese Gelcoat-Schicht, also die Hartlackschicht die Sichtseite 5 des Sanitärgegenstands gebildet wird. Die Gelcoat-Schicht 4 ist an allen Flächen des Trägers 2 aufgebracht, die in der Montagestellung des Sanitärgegenstands 1 sichtbar sind. An der nicht sichtbaren Rückseite oder Unterseite des Trägers 2 ist demzufolge keine Applikation erforderlich.

Die Figuren 2 - 4 zeigen verschiedene Ausführungsvarianten bezüglich insbesondere der Ausbildung des Trägers 2. In Fig. 2, die eine Teilansicht des Sanitärgegenstands aus Fig. 1 zeigt, ist der Träger 2 über eine ausgehärtete Harz- oder Polymermatrix 6 gebildet, in die andererseits eine Vielzahl von Verstärkungsfasern in Form von kürzeren Faserstücken 7 eingebettet ist. Hierbei handelt es sich vorzugsweise um Glasfaserstücke, die eine Länge von bevorzugt 1 - 35 mm aufweisen, bei einer bevorzugten Dicke von 10 - 15 µm. Je kürzer die Faserstücke sind, umso leichter kann die fluide, aus dem fluiden Harz und den Faserstücken bestehende Trägermasse durch Aufspritzen appliziert werden.

Fig. 3 zeigt eine Ausführungsform, bei der der Träger 2 aus der Harz- oder Polymermatrix 6 besteht, in die als Verstärkungsfasern mehrere Matten 8, die sich größerflächig in der Harz- oder Polymermatrix 6 erstrecken, eingebracht sind. Hier wird im Rahmen des Herstellverfahrens zunächst eine erste dünnere Teilschicht aus der fluiden Trägermasse appliziert, also beispielsweise aufgespritzt, wonach eine erste oder mehrere erste Fasermatten 8 aufgelegt werden, das Mattengewicht beträgt bevorzugt zwischen 200 - 600 g/m². Anschließend wird, gegebenenfalls nach Positionierung eines Verstärkungselements 3, eine weitere Teilschicht appliziert, in die sodann eine oder mehrere weitere Fasermatten 8 eingedrückt werden, wonach gegebenenfalls nochmals eine Teilschicht appliziert wird. Das heißt, dass hier ein sukzessiver Schichtaufbau vorgesehen wird, um die separaten Fasermatten 8 einzubetten.

Fig. 4 zeigt schließlich eine Variante, bei der der Träger 2 wiederum aus der Harz- oder Polymermatrix 6 besteht, darüber hinaus aber sowohl kürzere Faserstücke 7 als auch mehrere größerflächige Fasermatten 8 enthält. Hier kommen also beide Faservarianten zum Einsatz. Die Fasermatten sind ebenfalls aus Glasfaser, das Mattengewicht beträgt bevorzugt zwischen 200 - 600 g/m².

Die Gelcoat-Schicht 4 wird durch Aufspritzen oder Aufsprühen einer entsprechenden aushärtbaren Gelcoat-Masse appliziert. Ihre Dicke nach dem Aushärten liegt im Bereich von 0,4 - 1,5 mm, bevorzugt im Bereich zwischen 0,5 - 1,0 mm. Insbesondere beim Aufspritzen oder Aufsprühen kann eine sehr homogene Schichtdicke erreicht werden, da die fluide Gelcoat-Masse ohne Weiteres verspritzt werden kann, nachdem es sich um ein Lacksystem handelt, das mit einer entsprechenden Spritzpistole oder dergleichen appliziert werden kann.

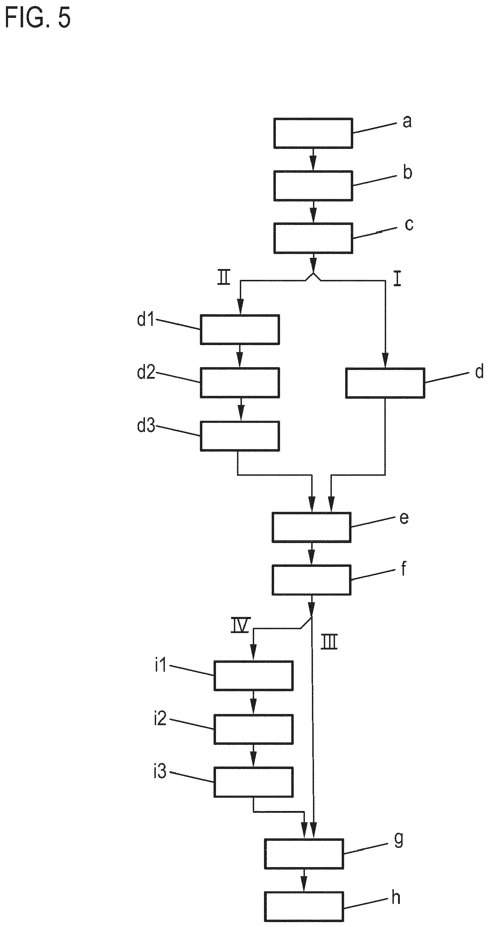

Fig. 5 zeigt ein Flussdiagramm, anhand dem eine erste erfindungsgemäße Verfahrensvariante erläutert wird. Im Schritt a wird zunächst eine Form, die die Form des Sanitärgegenstands vorgibt, bereitgestellt, gereinigt und soweit erforderlich abgedichtet. Im Schritt b wird zunächst auf eine Fläche der Form die fluide Gelcoat-Masse aufgebracht, bevorzugt aufgesprüht oder aufgespritzt. Diese Gelcoat-Masse wird sodann im Schritt c ausgehärtet, um die Gelcoat-Schicht auszubilden, die entsprechende mechanische und optische Eigenschaften aufweist.

Anschließend wird bei noch in der Form befindlicher, ausgehärteter Gelcoat-Schicht der Träger ausgebildet. Hier sind zwei verschiedene Verfahrensalternativen gegeben, nämlich die erste Variante, bei der es nicht erforderlich ist, ein oder mehrere Verstärkungselemente trägerseitig vorzusehen, oder die zweite Variante, bei der im Träger ein oder mehrere Verstärkungselemente eingebettet sind. Die erste Variante ist dem Pfeil I folgend dargestellt. Im Schritt d wird bei dieser Variante eine fluide Trägermasse in der Menge, wie sie zur Ausbildung des kompletten Trägers erforderlich ist, auf die ausgehärtete Gelcoat-Schicht aufgebracht, vorzugsweise auch hier wiederum aufgespritzt. Die Menge an Trägermasse wird entsprechend gewählt, sodass sich eine Schichtdicke am ausgehärteten Träger von beispielsweise 3 - 15 mm, insbesondere von ca. 5 - 12 mm ergibt. Das heißt, dass die Trägermasse in einem Beschichtungszug ausgebildet wird.

Sollen jedoch ein oder mehrere Verstärkungselemente gleich welcher Art appliziert werden, so gestaltet sich das Verfahren gemäß Pfeil II. Hier wird in einem ersten Schritt d1 eine erste Schicht aus der Trägermasse auf die Gelcoat-Schicht aufgespritzt. Im Schritt d2 wird sodann das oder werden die Verstärkungselemente entsprechend positioniert, wonach im Schritt d3 eine zweite Schicht aus der fluiden Trägermasse aufgespritzt wird, die einerseits auf die erste Teilschicht aufgespritzt wird, andererseits aber auch die Verstärkungselemente vollständig einbettet. Hier kann sich die Dicke der individuellen Trägerschichten von der Trägerschicht der ersten Variante unterscheiden. Insbesondere können die Trägerschichten dünner sein, beispielsweise zwischen 0,5 mm bis 12 mm, insbesondere von ca. 0,5 mm bis 6 mm.

Festzustellen hierbei ist, dass die Trägermasse entweder von Haus aus mit entsprechenden Faserstücken vorzugsweise aus Glasfaser versehen ist, die also mit aufgespritzt werden. Denkbar ist es alternativ oder zusätzlich auch, wenigstens eine Fasermatte oder mehrere separate Mattenstücke einzubetten, die beispielsweise nach Aufsprühen der einen Trägermasseschicht aufgelegt und eingedrückt wird oder werden, oder die nach Aufsprühen der ersten Teilschicht aufgelegt und eingedrückt wird oder werden, und von denen eine weitere nach Aufsprühen der zweiten Teilschicht aufgelegt und eingedrückt wird. Im Schritt e wird die Trägermasse ausgehärtet, um sodann einen ausgehärteten Träger zu bilden. Am Ende dieses Schritts e ist der Sanitärgegenstand, was seine grundsätzliche Herstellung angeht, fertig. Er besteht aus dem ausgehärteten, faserverstärkten Träger sowie der aufgebrachten, dünnen Gelcoat- oder Hartlackschicht.

Im Schritt f erfolgt die Entformung des Sanitärgegenstands aus der Form.

Je nachdem, ob der Sanitärgegenstand ein einstückiges Bauteil ist, oder ob an dem derart hergestellten Sanitärgegenstand noch ein weiteres Bauteil anzubringen ist, gestaltet sich der weitere Verfahrensgang. Ist der Sanitärgegenstand fertig, so kann, wie über den Pfeil III dargestellt, im Schritt g eine Oberflächenbehandlung der Sichtfläche erfolgen, beispielsweise durch Sandstrahlen, Schleifen oder Polieren, beispielsweise um eine matte Oberfläche zu erzeugen. Im Schritt h kann noch beispielsweise eine Kantenbearbeitung oder Ähnliches erfolgen, um dort, wo letztlich die Anbindung an die umstehende Peripherie im Rahmen der Montage erfolgt, definierte Schnittstellen auszubilden.

Für den Fall, dass noch ein weiteres Bauteil wie beispielsweise eine Schürze oder Ähnliches an dem im Schritt f entformten Sanitärgegenstand anzubringen ist, werden, dem Schritt g vorgeschaltet, weitere Bearbeitungsschritte durchgeführt. So können im Schritt i1 entsprechende Kanten oder Ecken oder dergleichen des Sanitärgegenstands, wo das zusätzliche Bauteil anzuschließen ist, entsprechend beschnitten oder beschliffen werden, sie werden also mechanisch bearbeitet. Im Schritt i2 wird der Sanitärgegenstand und das Bauteil exakt zueinander justiert, wonach sie im Schritt i3 miteinander verbunden werden, bevorzugt über ein Klebeharz. Sodann schließen sich auch bei diesem Verfahrenszug die Schritte g und h an.

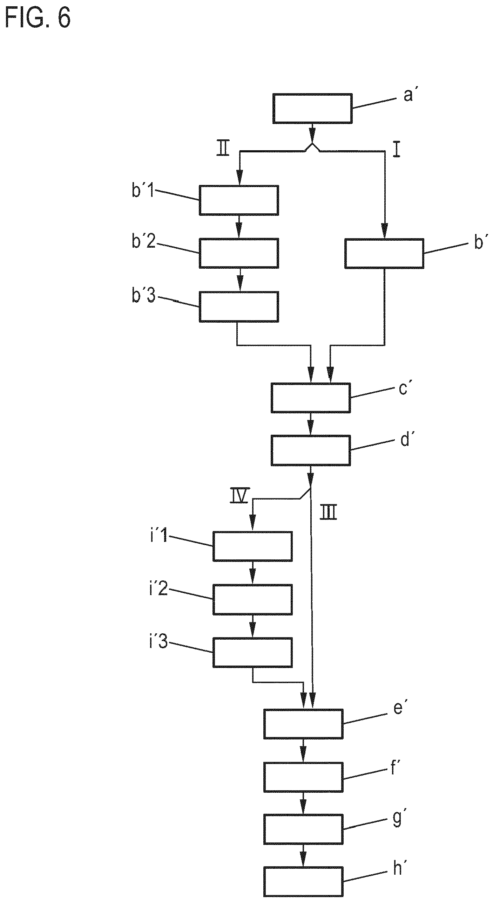

Fig. 6 zeigt eine Verfahrensvariante, bei der nur ein Teil des Sanitärgegenstands in der Form erzeugt wird, die eigentliche Fertigstellung erfolgt jedoch außerhalb der Form.

Auch hier wird im Schritt a' zunächst die Form bereitgestellt und entsprechend gereinigt und abgedichtet, also hergerichtet. Sodann wird unmittelbar der Träger in der Form ausgebildet. Auch hier sind wiederum zwei unterschiedliche Varianten, die über die Pfeile I und II gekennzeichnet sind, denkbar. Gemäß der Variante I sind keine Verstärkungselemente in der Trägermasse zu integrieren, weshalb gemäß dortigem Schritt b' die gesamte Trägermasse in die Form auf die entsprechende Formfläche aufgebracht, insbesondere aufgespritzt wird, bis die gewünschte Schichtdicke erreicht ist. Nach dem Aufbringen wird die Trägermasse im Schritt c' ausgehärtet, sodass in der Form der komplette Träger gebildet wird.

Sollen jedoch ein oder mehrere Verstärkungselemente, bedingt durch die Form des Sanitärgegenstands, in dem Träger eingebettet werden, so wird gemäß Pfeil II im Schritt b'1 zunächst eine erste Teilschicht aus der Trägermasse aufgebracht, insbesondere aufgespritzt, wonach im Schritt b'2 das oder die Verstärkungselemente appliziert werden. Hieran schließt sich gemäß Schritt b'3 das Aufbringen einer zweiten Teilschicht aus der Trägermasse an, die die Verstärkungselemente vollständig einbettet. Nach Applikation der zweiten Teilschicht erfolgt auch in diesem Verfahrenszug das Aushärten der Trägermasse gemäß Schritt c', sodass auch hier dann formseitig der fertige Träger vorliegt.

Auch hier gilt, dass die Trägermasse entweder bereits in die fluide Harzmasse eingebrachte Faserstücke enthält, die mit verspritzt werden. Zusätzlich oder alternativ können auch, wie bereits beschrieben, entsprechende Fasermatten eingelegt werden.

Im Schritt d' wird sodann der Träger der Form entnommen. Dieser Träger dient sodann quasi als Form für die Aufbringung der Gelcoat-Masse.

Auch hier sind wiederum zwei Verfahrensvarianten denkbar, die über die Pfeile III und IV dargestellt sind. Sie unterscheiden sich wiederum darin, ob der finale Sanitärgegenstand ein einstückiges Bauteil ist, oder ein zusätzliches Bauteil wie eine Schürze oder dergleichen aufweisen soll.

Der Pfeil III zeigt die Variante, bei der der Sanitärgegenstand ein einstückiges Bauteil ist. Im Schritt e' wird auf die Fläche des entformten Trägers, die die Sichtfläche des fertigen Sanitärgegenstands definiert, die Gelcoat-Masse aufgebracht, insbesondere aufgespritzt. Die Applikation kann sehr exakt mit homogener Schichtstärke erfolgen, da der Harzlack problemlos fein dosiert aufgespritzt werden kann.

Im Schritt f' wird sodann die Gelcoat-Masse ausgehärtet. Am Ende dieses Härtevorgangs ist letztlich der fertige Sanitärgegenstand bestehend aus dem gehärteten Träger und der gehärteten Gelcoat-Schicht gebildet.

Im Schritt g' kann sich sodann noch eine Oberflächenbehandlung anschließen, beispielsweise durch Sandstrahlen oder Polieren oder Ähnliches, wie im Schritt h' ein optionaler Kantenbeschnitt oder Ähnliches erfolgen kann.

Soll ein weiteres Bauteil angebunden werden, so ist der Verfahrenszug IV zu betrachten. Dem Entformen im Schritt d` folgt ein Schritt i'1, in dem die Kanten oder Ecken oder dergleichen zur Bildung definierter Schnittstellen am Träger bearbeitet werden. Im Schritt i'2 wird dann der Träger und das Bauteil entsprechend exakt zueinander ausgerichtet und im Schritt i'3 miteinander verbunden, vorzugsweise mittels eines Klebeharzes. Nach Aushärtung des Harzes schließt sich sodann der Schritt e' mit der Applikation der Gelcoat-Masse etc. an.

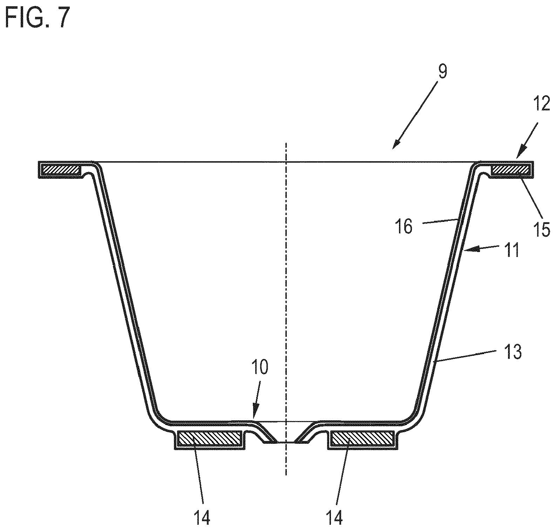

Fig. 7 zeigt eine Schnittansicht eines erfindungsgemäßen Sanitärgegenstands in Form einer Badewanne 9. Diese Badewanne 9 weist einen Boden 10, umlaufende Seitenwände 11 und einen umlaufenden Wannenrand 12 auf. Sie besteht aus einem Träger 13 aus faserverstärktem Kunststoff, in den Verstärkungselemente 14 am Boden 10 und Verstärkungselemente 15 am Wannenrand 12 eingebettet sind. Auf die Innenseite des Trägers 13 ist eine Gelcoat-Schicht 16 aus einem Hartlack aufgebracht.

Eine solche Badewanne 10 wurde als Testobjekt hergestellt. Die erfindungsgemäße Badewanne 10 wurde unter Verwendung folgender Materialien hergestellt:
Zur Vorbereitung der Form wurde als Formversiegelungsmittel Chemlease^{®} 15 Sealer EZ der Firma Chem Trend und als Trennmittel Zyvax^{®} WaterShield^{™} Release Agent der Firma Chem Trend verwendet und auf die Gießform appliziert.

Zur Herstellung der weißen Gelcoat-Schicht Gel wurde ein für die Sprühapplikation geeignetes Isophthalharz, nämlich GC 188 Isophtalic Gel Coat der Firma KoverTek, Nord Composites verwendet.

Als Harz für den Träger wurde ein handelsübliches ungesättigtes Orthophtalsäure-Polyesterharz, ungewachst, verwendet. Es wurde das unter dem Namen Polycoat SLO 180NT erhältliche Harz der Firma Aekyung Chemical CO., LTD verwendet.

Als Härter wurde der unter dem Namen "Butanox^{®} M-50" erhältliche Härter der Firma AkzoNobel verwendet, ein MEKP-Härter.

Als Glasfaser wurde ein E-Glass Multi-End-Roving ERS 240-T132BS, geeignet für ein Aufspritzen, der Firma CTG Taishan Fiberglass Inc. verwendet. Die Länge der Fasern betrug 5 mm - 35 mm. Es handelt sich um ein kontinuierliches Faserbündel (continuous roving), die Auftrennung in kurze Fasern erfolgt erst im Faserspritzverfahren.

Als Verstärkungselemente wurden Holzteile verwendet. Die im Boden eingebetteten Holzteile hatten eine Dicke von ca. 15 mm, die im Wannenrand eingebetteten Holzteile eine Dicke von ca. 10 mm.

Die Herstellung der erfindungsgemäßen Badewanne erfolgte gemäß der ersten, oben beschriebenen Verfahrensvariante. Zunächst wurde die Gelcoat-Masse auf die Form aufgesprüht, wonach die Masse zur Bildung der Gelcoat-Schicht bei einer Temperatur von 45°C für 15 Minuten aushärtete. Anschließend wurde die Trägermasse aufgespritzt und bei einer Temperatur von 45°C für 1 h 30 min ausgehärtet.

Die Dicke der Gelcoat-Schicht an der fertigen Badewanne betrug zwischen 0,65 mm und 1,1 mm. Die typische Dicke in wenig beanspruchten Bereichen wie den Seitenwänden betrug ca. 0,7 mm, die Dicke in stärker beanspruchten Bereichen wie dem Boden betrug ca. 0,9 mm, während die Dicke in stark beanspruchten Bereichen wie dem Wannenrand, auf dem der Nutzer oft sitzt oder Bekleidungsstücke ablegt, betrug 1 - 1,1mm.

Die Dicke des Trägers variiert lokal, sowohl abhängig vom jeweiligen Wannenbereich als auch, ob ein Verstärkungselement eingebettet ist oder nicht.

In Bereichen ohne Verstärkungselement beträgt die Dicke an den Seitenwänden ca. 4 mm, am Boden zwischen 9 - 10 mm.

In Bereichen mit Verstärkungselementen am Wannenrand beträgt die Trägerteilschichtdicke zwischen der Gelcoat-Schicht und dem Verstärkungselement ca. 1,5 mm, und die das Verstärkungselement schließlich einbettenden Teilschicht hat eine Dicke von ca. 2,5 mm.

Am Boden weist die Trägerteilschicht zwischen der Gelcoat-Schicht und dem Verstärkungselement eine Dicke von ca. 4 mm auf, während die das Verstärkungselement einbettende Teilschicht eine Dicke von ca. 5 mm aufweist.

Zu Vergleichszwecken wurde eine Vergleichs-Badewanne aus dem von der Anmelderin seit langem verwendeten Material "DuraSolid^{®}", aus dem bekannte Badewannen hergestellt werden. Der Werkstoff "DuraSolid^{®}" besteht vorwiegend aus natürlichen Mineralien, Harz als Bindemittel und Farbpigmenten.

Zur Herstellung wird in einem ersten Schritt wird die flüssige Gießmasse in eine Form eingebracht und in einer Trockenkammer gehärtet, im zweiten Schritt wird der erstarrte Badewannenkörper in einem Trockenofen bei Temperaturen bis zu 70 Grad getrocknet. Während dieser Trocknungsphasen wird eine endgültige Härtung des Materials erreicht. Die Dicke der Wanne beträgt ca. 12 mm im Rand- und Seitenbereich, am Boden ca. 26 mm.

Bereits beim Gewicht zeigen sich deutliche Unterschiede zwischen der erfindungsgemäßen Badewanne und der Vergleichs-Badewanne. Während die Vergleichs-Badewanne ca. 160 kg wiegt, wiegt die erfindungsgemäße Badewanne nur ca. 90 kg, d.h., dass das Gewicht um 70 kg, als um über 40% reduziert werden kann.

Auch die mechanische Stabilität kann durch den erfindungsgemäßen Aufbau verbessert werden. Hierzu wurde ein Falltest mit einem Fallgewicht von 435 g durchgeführt. Das Fallgewicht wurde aus verschiedenen Höhen auf den Boden der Wanne fallen gelassen, bis es zum Bruch kann. Die Vergleichs-Badewanne brach bei einer bereits beachtlichen Fallhöhe von 2,5 m, während die erfindungsgemäße Badewanne erst bei einer Fallhöhe von 4 m brach. Auch hier kann eine deutliche Verbesserung erreicht werden.

Wie die Vergleichs-Badewanne bestand die erfindungsgemäße Badewanne natürlich auch den Beständigkeit gegen Temperaturwechsel-Test, bei dem gemäß der Vorschrift DIN EN 14516 die jeweilige Badewanne in schneller Folge unterschiedlichen Temperaturen ausgesetzt werden.

In Anlehnung an DIN EN 14688:2018-12 "Sanitärausstattungsgegenstände - Waschbecken - Funktionsanforderungen und Prüfverfahren" wurden Kratztests durchgeführt. Hierbei darf bei einer Prüfkraft von 10N kein Kratzer tiefer als 0,1mm und/oder als die Gesamttiefe der Deckschicht sein, je nachdem welcher Wert niedriger ist. Die erfindungsgemäß hergestellte Badewanne und damit das neue Material bestand diesen Kratztest.

## Patentansprüche

1. Sanitärgegenstand, bestehend aus einem aus einem ausgehärteten Harz mit eingebetteten Verstärkungsfasern gebildeten, die Form des Sanitärgegenstands definierenden Träger (2, 13), der zumindest an einer Sichtseite mit einer ausgehärteten Gelcoat-Schicht (4) belegt ist.

2. Sanitärgegenstand nach Anspruch 1, **dadurch gekennzeichnet, dass** das Harz des Trägers (2, 13) ein Epoxidharz, ein Polyesterharz, ein Acrylharz, ein Vinylesterharz oder Derivate davon ist.

3. Sanitärgegenstand nach Anspruch 1 oder 2, **dadurch gekennzeichnet, dass** die Verstärkungsfasern in Form von eine Länge von 1 - 35 mm und/oder eine Dicke von 10 - 15 µm aufweisenden Faserstücken (7) vorliegen, oder dass die Fasern in Form von Fasermatten (8) mit einem Mattengewicht von 200 - 600 g/m² vorliegen.

4. Sanitärgegenstand nach einem der vorangehenden Ansprüche, **dadurch gekennzeichnet, dass** es die Verstärkungsfasern Glasfasern sind.

5. Sanitärgegenstand nach einem der vorangehenden Ansprüche, **dadurch gekennzeichnet, dass** in dem Träger (2,13) an einer oder mehreren Positionen platten- oder leisten- oder profilförmige Verstärkungselemente (3, 14, 15) eingebettet sind.

6. Sanitärgegenstand nach Anspruch 5, **dadurch gekennzeichnet, dass** das oder jedes Verstärkungselement (3, 14, 15) aus Holz, Sperrholz, Schichtholz, einem Laminat, insbesondere einem Faserlaminat oder Metall ist, oder eine Faserplatte ist.

7. Sanitärgegenstand nach Anspruch 5 oder 6, **dadurch gekennzeichnet, dass** das oder die Verstärkungselemente (3, 14, 15) im Bereich eines Bodens (10), eines Wannen- oder Beckenabschnitts und/oder eines Randbereichs (12) des Trägers (2, 13) vorgesehen ist.

8. Sanitärgegenstand nach einem der vorangehenden Ansprüche, **dadurch gekennzeichnet, dass** die Gelcoat-Schicht (4) aus einem Polyesterharz, Vinylesterharz oder Epoxidharz ist.

9. Sanitärgegenstand nach einem der vorangehenden Ansprüche, **dadurch gekennzeichnet, dass** die Gelcoat-Schicht (4) Farbpigmente und/oder ein antibakteriell wirkendes Mittel enthält.

10. Sanitärgegenstand nach einem der vorangehenden Ansprüche, **dadurch gekennzeichnet, dass** die Gelcoat-Schicht (4) eine Dicke von 0,4 - 1,5 mm, insbesondere von 0,5 - 1,0 mm aufweist, und/oder dass der Träger (2, 13) eine Dicke von 0,5 - 12 mm in einem Bereich ohne Verstärkungselement (3, 14, 15) und 0,5 - 6 mm in einem Bereich mit Verstärkungselement (3, 14, 15) aufweist.

11. Sanitärgegenstand nach einem der vorangehenden Ansprüche, **dadurch gekennzeichnet, dass** die mit der Gelcoat-Schicht (4) belegte Fläche des Trägers (2, 13) zumindest abschnittsweise eine Oberflächenstrukturierung aufweist, die auch von der Gelcoat-Schicht (4) abgebildet ist, oder dass die Oberfläche zumindest abschnittsweise mattiert ist.

12. Sanitärgegenstand nach einem der vorangehenden Ansprüche, **dadurch gekennzeichnet, dass** der Sanitärgegenstand (1) eine Badewanne oder eine Duschtasse ist.

13. Verfahren zur Herstellung eines Sanitärgegenstands nach einem der vorangehenden Ansprüche, mit folgenden Schritten:
- Bereitstellen einer Form und Aufbringen einer fluiden Gelcoat-Masse auf eine Fläche der Form
- Aushärten der Gelcoat-Masse zur Ausbildung einer Gelcoat-Schicht
- Aufbringen einer fluiden Trägermasse enthaltend ein Harz und Verstärkungsfasern auf die Gelcoat-Schicht, sowie gegebenenfalls ein oder mehrere Verstärkungselemente
- Aushärten der Trägermasse zur Ausbildung eines Trägers
- Entnahme des Sanitärgegenstands aus der Form.

14. Verfahren nach Anspruch 13, **dadurch gekennzeichnet, dass** zur Einbettung eines oder mehrerer Verstärkungselements zunächst eine erste Teilschicht aus der Trägermasse aufgebracht wird, wonach das oder die Verstärkungselemente auf die erste Teilschicht aufgebracht werden, wonach eine die Verstärkungselemente einbettende zweite Teilschicht aus der Trägermasse auf die erste Teilschicht und das oder die Verstärkungselemente aufgebracht wird.

15. Verfahren nach Anspruch 13 oder 14, **dadurch gekennzeichnet, dass** nach dem Entformen eine Bearbeitung einer von der Gelcoat-Schicht gebildeten Sichtseite des Sanitärgegenstands erfolgt.

16. Verfahren nach einem der Ansprüche 13 bis 15, **dadurch gekennzeichnet, dass** nach dem Entformen, und gegebenenfalls vor der Bearbeitung der Oberfläche, ein oder mehrere Randabschnitte des Sanitärgegenstands bearbeitet und mit einem oder mehreren weiteren Bauteilen verbunden, insbesondere verklebt werden.

17. Verfahren zur Herstellung eines Sanitärgegenstands nach einem der Ansprüche 1 bis 12, mit folgenden Schritten:
- Bereitstellen einer Form und Aufbringen einer fluiden Trägermasse enthaltend ein Harz und Verstärkungsfasern sowie gegebenenfalls ein oder mehrere Verstärkungselemente auf eine Fläche der Form
- Aushärten der Trägermasse zur Ausbildung eines Trägers
- Entnahme des Trägers aus der Form
- Aufbringen einer fluiden Gelcoat-Masse auf eine Fläche des Trägers
- Aushärten der Gelcoat-Masse zur Ausbildung einer Gelcoat-Schicht

18. Verfahren nach Anspruch 17, **dadurch gekennzeichnet, dass** zur Einbettung eines oder mehrerer Verstärkungselemente zunächst eine erste Teilschicht aus der Trägermasse aufgebracht wird, wonach das oder die Verstärkungselemente auf die erste Teilschicht aufgebracht werden, wonach eine die Verstärkungselemente einbettende zweite Teilschicht aus der Trägermasse auf die erste Teilschicht und das oder die Verstärkungselemente aufgebracht wird.

19. Verfahren nach Anspruch 18, **dadurch gekennzeichnet, dass** nach dem Ausbilden der Gelcoat-Schicht eine Bearbeitung einer von der Gelcoat-Schicht gebildeten Sichtseite des Sanitärgegenstands erfolgt.

20. Verfahren nach Anspruch 19, **dadurch gekennzeichnet, dass** nach dem Aushärten der Gelcoat-Schicht, und gegebenenfalls vor der Bearbeitung der Oberfläche ein oder mehrere Randabschnitte des Sanitärgegenstands bearbeitet und mit einem oder mehreren weiteren Bauteilen verbunden, insbesondere verklebt werden.

21. Verfahren nach einem der Ansprüche 13 bis 20, **dadurch gekennzeichnet, dass** die Gelcoat-Masse bei einer Temperatur von 35°C - 55°C für eine Dauer von 5 - 20 min und die Trägermasse bei einer Temperatur von 35°C - 55°C für eine Dauer von 1 - 2 h ausgehärtet wird.

22. Verfahren nach einem der Ansprüche 13 bis 21, **dadurch gekennzeichnet, dass** die Gelcoat-Masse und/oder die Trägermasse aufgespritzt oder mittels Pinsel oder Bürste aufgetragen werden.

23. Verfahren nach einem der Ansprüche 13 bis 22, **dadurch gekennzeichnet, dass** eine Trägermasse verwendet wird, die bereits Faserstücke enthält, oder dass die Fasern in Form von Fasermatten in die Trägermasse eingebettet werden.

24. Verfahren nach einem der Ansprüche 13 bis 23, **dadurch gekennzeichnet, dass** die verwendete Gelcoat-Masse folgendes enthält:
- Harz: 85 - 95 Gew.%
- Pigment: bis 7 Gew.%
- Antibakterielles Mittel: bis 0,5 Gew.%,
und dass die verwendete Trägermasse folgendes enthält:
- Harz: 40 - 74 Gew.%
- Härter: 1 - 5 Gew.%
- Glasfaser: 10 - 25 Gew.%
- Füllstoff: 0 - 50 Gew.%

25. Verfahren nach Anspruch 24, **dadurch gekennzeichnet, dass** die verwendete Trägermasse folgendes enthält:
- Harz: 40 - 60 Gew.%
- Härter: 1 - 3 Gew.%
- Glasfaser: 10 - 13 Gew.%
- Füllstoff: 30 - 50 Gew.%,
oder
- Harz: 56 - 74 Gew.%
- Härter: 1 - 5 Gew.%
- Glasfaser: 10 - 25 Gew.%
- Füllstoff: 0 - 30 Gew.%.
